(19) Europäisches Patentamt
European Patent Office
Office européen des brevets

(11) Numéro de publication: **0 086 313**
**A1**

(12) # DEMANDE DE BREVET EUROPEEN

(21) Numéro de dépôt: **82400259.6**

(22) Date de dépôt: **15.02.82**

(51) Int. Cl.³: **B 01 D 59/34**

(43) Date de publication de la demande: **24.08.83**
**Bulletin 83/34**

(84) Etats contractants désignés: **BE DE GB IT NL**

(71) Demandeur: **COMMISSARIAT A L'ENERGIE ATOMIQUE**
**Etablissement de Caractère Scientifique Technique et Industriel, 31/33, rue de la Fédération, F-75015 Paris (FR)**

(72) Inventeur: **Folcher, Gérard, 40, Allée de Persépolis, F-91400 Orsay (FR)**
Inventeur: **Paris, Jacques, 35, rue du Général de Gaulle, F-91440 Bures sur Yvette (FR)**
Inventeur: **Rigny, Paul, 16, Avenue Charles Péguy, F-92300 Sceaux (FR)**

(74) Mandataire: **Mongrédien, André et al, c/o BREVATOME 25, rue de Ponthieu, F-75008 Paris (FR)**

(54) **Procédé de séparation isotopique de l'uranium par irradiation laser.**

(57) Procédé de séparation isotopique de l'uranium par faisceau laser.

Ce procédé selon lequel on envoie dans un mélange gazeux contenant des composés d'uranium 235 et d'uranium 238 au moins un faisceau de lumière émis par un ou plusieurs lasers pour réaliser une excitation sélective des composés d'uranium 235 ou d'uranium 238, se caractérise en ce que les composés d'uranium 235 et d'uranium 238 du mélange gazeux ont pour formule : $UO_2XYB_n$, dans laquelle X et Y sont des anions monovalents minéraux ou organiques, identiques ou différents, B est une base organique forte de Lewis et n est un nombre au plus égal à 3.

Application à l'enrichissement de l'uranium pour les combustibles nucléaires.

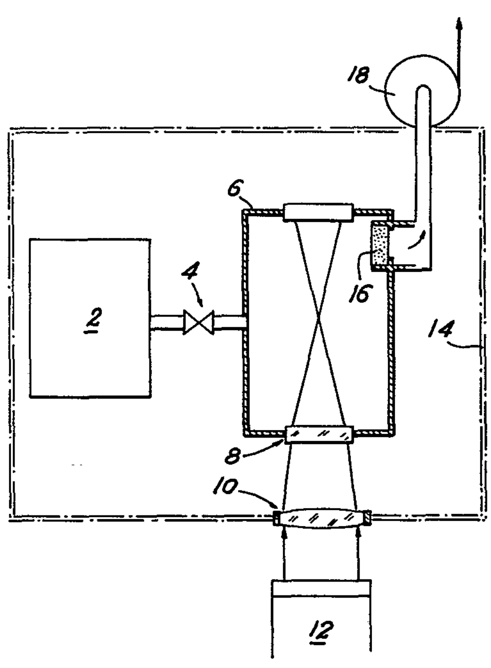


EP 0 086 313 A1

La présente invention concerne un procédé de séparation isotopique selon lequel on sépare, de façon sélective et efficace, un composé isotopique donné d'uranium gazeux, d'un mélange de gaz, certains des corps constituant les composés gazeux du mélange étant formés à partir de l'isotope U 235 de l'uranium et de l'isotope U 238 de l'uranium.

On sait que pour fabriquer des combustibles nucléaires dits "enrichis" il est nécessaire de séparer l'uranium 235, de l'uranium 238.

Une voie prometteuse pour réaliser cette séparation est l'utilisation d'un faisceau laser de puissance émettant un faisceau de lumière monochromatique, la monochromaticité de la lumière émise permettant d'exciter préférentiellement une transition correspondant à un isotope de l'uranium sans exciter l'autre isotope. Cette excitation entraîne, soit une dissociation de l'un des composés isotopiques du mélange gazeux (préférentiellement le composé isotopique d'uranium 235), auquel cas le composé dissocié peut être séparé du mélange isotopique par voie physique ou chimique soit une activation de l'un des composés isotopiques pour l'amener dans un état physicochimique dans lequel il est susceptible de réagir avec un réactif approprié, présent par exemple dans le mélange gazeux, de façon à pouvoir séparer ensuite la combinaison chimique résultante dans laquelle est emmagasiné un seul desdits isotopes du mélange gazeux.

Considérant l'ion uranyle, plusieurs excitations sont possibles. En effet, cet ion présente un domaine d'absorption en lumière IR et en lumière visible. La lumière IR est absorbée en excitant les vibrations et les rotations de la molécule et en particulier la vibration asymétrique de l'ion $UO_2^{2+}$ , vibration qui présente un déplacement isotopique , à une fréquence voisine de 940 $cm^{-1}$; la lumière visible est absorbée par les transitions électroniques du même ion, situées entre 20000 et 30000 $cm^{-1}$ sur lesquelles un déplacement isotopique est également observable ne

serait-ce que parce qu'il se manifeste sur les transitions électroniques couplées aux transitions vibrationnelles.

On peut donc obtenir une excitation sélective de ces molécules en utilisant :

- un laser à $CO_2$ dont les raies d'émission se trouvent dans la zone 900 - 1000cm$^{-1}$, c'est une source particulièrement intéressante car elle est très puissante et bon marché. Selon la nature de l'excitation désirée on utilisera, soit un laser pulsé de type TEA capable de délivrer plusieurs joules par impulsion, soit un laser continu de forte puissance (plusieurs KW), soit un laser continu ou pulsé de faible puissance,
- un laser à colorant émettant dans le domaine 500 nm - 300 nm continu ou pulsé.

Il peut également être intéressant d'apporter l'énergie nécessaire à une excitation du composé isotopique par la combinaison d'un laser à $CO_2$ et d'une source UV. Dans ce cas, la sélectivité ne proviendrait que du laser à $CO_2$.

Pour que l'interaction entre le faisceau laser et le composé d'uranium soit sélective, il est généralement préférable que les composés d'uranium soient à l'état gazeux car à l'état condensé la largeur des raies bien connue IR et visible des composés est supérieure au déplacement isotopique. De plus, pour que le rendement du procédé de séparation soit élevé, il faut que la pression de ces composés gazeux soit suffisante pour que les interactions entre un photon du faisceau laser et une molécule du composé d'uranium soient suffisamment probables.

Pour obtenir une pression gazeuse suffisante il est nécessaire que les molécules du composé gazeux de l'uranium soient suffisamment volatiles ; les pressions utiles sont alors obtenues en portant le mélange isotopique gazeux à une température suffisante de 100 à quelques centaines de degrés. Mais il est également nécessaire que, à cette température, les composés d'uranium soient stables pour éviter toute décomposition. De plus, il est favorable que les composés d'uranium ne présentant pas de spectre d'absorption autre que la bande à irradier, dans le domaine

d'émission, soit du laser à $CO_2$ si on choisit cette source, soit dans le visible au voisinage des absorptions du composé d'uranium si on irradie avec un laser à colorant.

En bref, il convient que les composés d'uranium utilisés soient suffisamment volatils, stables aux températures utilisées et aient un spectre d'absorption isotopique sélectif aux longueurs d'ondes considérées.

Le procédé de séparation isotopique d'uranium selon l'invention consiste à envoyer dans un mélange gazeux contenant des composés d'uranium 235 et d'uranium 238, au moins un faisceau de lumière émis par un ou plusieurs lasers pour réaliser une excitation sélective des composés d'uranium 235 ou d'uranium 238 et il se caractérise en ce que les composés d'uranium 235 et d'uranium 238 ont pour formule : $UO_2XYB_n$

dans laquelle X et Y sont des anions monovalents, minéraux ou organiques, identiques ou différents, B est une base organique forte de Lewis, et _n_ est un nombre au plus égal à 3.

Les composés d'uranium 235 et d'uranium 238 répondant à la formule générale précitée présentent notamment l'avantage de posséder des propriétés de volatilité, de stabilité et d'absorption, dans le domaine infra-rouge et dans le domaine visible, qui les rendent particulièrement adaptées comme mélange gazeux pour la séparation des isotopes de l'uranium au moyen d'au moins un faisceau laser.

Par ailleurs, ces composés d'uranium se révèlent très intéressants pour la séparation isotopique par laser, car l'excitation sélective de l'ion uranyle du composé d'U 235 ou d'uranium 238, dans le domaine visible ou dans le domaine infrarouge, provoque une autoréduction de ce composé et le transforme en un produit non volatil qui peut être facilement séparé du mélange gazeux.

Dans ces composés, les anions X et Y et la base de Lewis B sont choisis de façon telle que les composés répondent aux impératifs précités de volatilité et de stabilité ; généralement les anions X et Y donnent au composé

d'uranium une volatilité acceptable telle que ce dernier présente à la température de mise en oeuvre du procédé une pression suffisante ; la base de Lewis B confère au composé d'uranium la stabilité nécessaire de façon que ce dernier ne soit pas décomposé à ladite température.

Dans un procédé de ce type, on a intérêt à opérer avec une pression partielle des composés gazeux supérieure à 1/10 de torr, et de préférence comprise entre 1/10 et 1 torr.

En effet, des pressions plus faibles nuisent à l'efficacité de l'interaction avec le faisceau laser ; en revanche, les pressions élevées entraînent des réactions entre les composés d'uranium 235 et d'uranium 238 par collision et relaxation et diminuent de ce fait la sélectivité car dans ce cas, le composé d'uranium 235 excité par le faisceau laser a tendance à réagir par collision avec le composé d'uranium 238 auquel il transfère son énergie d'activation qui est alors perdue, et qui entraîne de plus une autoréduction du composé d'uranium 238, ce qui est évidemment nuisible à la séparation des composés d'U 235 et d'U 238.

Aussi, les anions X et Y et la base organique B sont choisis de façon à obtenir des composés d'uranium susceptibles d'avoir une pression de vapeur supérieure ou égale à 0,1 torr, à une température telle qu'ils ne soient pas décomposés.

Selon l'invention, les anions monovalents X et Y sont avantageusement choisis dans le groupe comprenant les anions $Cl^-$, $Br^-$, $I^-$, $NO_3^-$, $SCN^-$, et les anions dérivés des acides aliphatiques fluorés et perfluorés tels que $CF_3COO^-$.

Dans certains cas, on améliore la volatilité du composé en choisissant des anions X et Y de nature différente.

Selon l'invention, la base organique forte de Lewis B présente avantageusement un moment dipolaire élevé, de préférence au moins égal à 5 Debye, et un volume moléculaire important, de préférence au moins égal à 100. En effet, le choix d'une base de Lewis B ayant les caractéristiques précitées améliore la stabilité du composé

d'uranium en raison, d'une part, de la forte interaction ion-dipôle qui est proportionnelle à la valeur du moment dipolaire, et, d'autre part, de la faible labilité du ligand due à la masse moléculaire élevée de ce dernier.

A titre de base organique forte de Lewis B susceptible de convenir, on peut citer l'hexaméthylphosphorotriamide de formule : $[(CH_3)_2N]_3-P = 0$, les phosphates et les oxydes d'amine.

De préférence, la base organique forte de Lewis B est l'hexaméthylphosphorotriamide.

A titre d'exemples de composés d'uranium utilisables dans le procédé de l'invention, on peut citer les composés de formules suivantes :

$UO_2\ (CF_3COO)_2\ (HMPT)_2$

$UO_2\ (NO_3)\ (SCN)\ (HMPT)_2$

$UO_2\ (SCN)_2\ (HMPT)_{2,5}$

$UO_2Br(NO_3)(HMPT)_2$

$UO_2\ (NO_3)_2\ (HMPT)_2$

$UO_2Br_2\ (HMPT)_2$

$UO_2I\ (NO_3)\ (HMPT)_2$

$UO_2Cl_2\ (HMPT)_2$

dans lesquelles HMPT représente l'hexaméthylphosphorotriamide de formule $0 = P[N(CH_3)_2]_3$.

De préférence, on utilise le composé $UO_2(CF_3COO)_2(HMPT)_2$ qui présente une pression partielle de 1torr à 230°C et de 0,01 torr à 160°C, ou le composé $UO_2(NO_3)(SCN)\ (HMPT)_2$ qui présente une pression de 1 torr à 260°C et de 0,01 torr à 200°C.

De tels composés d'uranium sont particulièrement avantageux pour la mise en oeuvre du procédé de l'invention, car ils possèdent des caractéristiques satisfaisantes de volatilité et de stabilité ainsi qu'une bande d'absorption de l'ion $UO_2^+$ entre 900 et 960cm$^{-1}$, qui peut être facilement irradié par un laser à $CO_2$. De plus, ils ne présentent pas de bandes d'absorption liées aux anions X et Y ou à la base B, qui soient superposées à la bande de l'uranyle dans le domaine infrarouge et/ou dans le domaine

visible.

Selon un premier mode de mise en oeuvre du procédé de l'invention, on envoie dans le mélange gazeux contenant les composés d'uranium 235 et d'uranium 238 un faisceau de lumière émis par un laser $CO_2$.

L'émission d'un laser à gaz carbonique s'effectue autour de $950cm^{-1}$, mais peut varier en fonction de la composition isotopique du gaz carbonique, de la pression etc... Dans ce domaine de longueur d'ondes, on peut trouver une raie du composé d'uranium en coïncidence avec une raie d'émission du laser pour l'un des isotopes et pas pour l'autre ; en effet, le déplacement isotopique sur la fréquence de vibration asymétrique de $UO_2^{2+}$ est de $0,8cm^{-1}$ supérieur à la largeur de la raie laser, ce qui rend possible la sélectivité.

Ainsi, en réglant l'émission du laser $CO_2$ sur une fréquence appropriée, on obtient une excitation sélective du composé gazeux d'uranium 235 présent dansle mélange, ce qui entraîne une autoréduction de ce composé d'U 235 et permet ainsi d'assurer facilement sa séparation du mélange gazeux car le composé réduit n'est pas volatil.

Selon un second mode de mise en oeuvre du procédé de l'invention, on envoie dans le mélange gazeux un faisceau de lumière émis par un laser à $CO_2$ et un faisceau de lumière ultraviolette.

Dans ce cas, la sélectivité ne provient que du laser à $CO_2$.

Selon un troisième mode de mise en oeuvre du procédé de l'invention, on envoie dans le mélange gazeux contenant des composés d'uranium 235 et d'uranium 238 un faisceau de lumière visible dont la;longueur d'onde est comprise entre 300 et 500 nanomètres.

Le faisceau de lumière visible peut être émis par un laser à colorant tel qu'un laser à COUMARINE délivrant une puissance suffisante dans le domaine d'absorption de l'ion uranyle.

D'autres buts et avantages de l'invention apparaîtront mieux après la description qui suit d'exemples de réalisation donnés à titre explicatif et nullement limitatif ; sur la figure unique annexée, on a représenté schématiquement un dispositif pour la mise en oeuvre du procédé de l'invention.

EXEMPLE 1

Le composé $UO_2$ $(CF_3COO)_2$ $(HMPT)_2$ où HMPT représente l'hexaméthylphosphorotriamide de formule $O = P[(N(CH_3)_2]_3$ est placé dans un réservoir fermé 2 ; le composé est envoyé dans une cellule d'irradiation 6, à des fins de séparation isotopique, par une vanne 4 limitant le débit. La cellule d'irradiation 6 est munie d'une fenêtre 8 par laquelle le faisceau laser 10 est introduit ; cette cellule 6 est réalisée en un métal ou un corps réfractaire ne réagissant pas avec le composé gazeux d'uranium.

Un dispositif de pompage 18 de type connu permet d'assurer la circulation du composé gazeux dans la cellule 6 ; un piège 16 recueille le composé solide produit par irradiation laser correspondant à un isotope. L'ensemble est placé dans une enceinte thermostatée 14 à une température de 235°C. Le laser 12 est soit un laser du type TEA (laser à excitation transverse) qui émet des impulsions de 1 Giga Watt, soit un laser continu d'une puissance de 3KW, impulsions lumineuses qui sont focalisées dans la cellule au moyen d'une lentille 10 en germanium par exemple. En accordant la fréquence du laser sur la fréquence d'absorption d'$^{235}UO_2$ dans le composé, égale à $947cm^{-1}$, on décompose sélectivement $^{235}UO_2$ $(CF_3COO)_2$ $(HMPT)_2$ qui donne un composé solide brun non volatil tandis que $^{238}UO_2$ $(CF_3COO)_2$ $(HMPT)_2$ traverse la cellule sans être modifié ; ainsi, on peut récupérer sous forme solide l'uranium 235 par exemple dans le filtre 16.

La pression de $UO_2$ $(CF_3COO)_2$ $(HMPT)_2$ dans la cellule d'irradiation 6 est de 1 torr et la cellule est longue de 20cm.

EXEMPLE 2

Le même composé $UO_2(CF_3COO)_2(HMPT)_2$ est introduit dans la même cellule d'irradiation 6. On utilise alors dans la cellule un laser à gaz carbonique continu de puissance 40 W focalisé dans la cellule ; on sélectionne la fréquence d'émission du laser en coïncidence avec la raie d'absorption du composé d'uranium 235. Le composé d'uranium 235 excité est réduit puis éliminé de la phase gazeuse par filtration.

EXEMPLE 3

Dans la même cellule où la fenêtre 8 est maintenant transparente à la lumière visible, on introduit le composé $UO_2(CF_3COO)_2(HMPT)_2$ à 235°C. On irradie par un laser à coumarine d'énergie de 100mJ sur des impulsions de 100ns dont on règle la fréquence d'émission sur une transition du spectre visible de l'uranium 235 distincte de celle de l'uranium 238.

La molécule ainsi irradiée subit une dégradation conduisant à un composé non volatil qui peut ainsi être éliminé de la phase gazeuse.

REVENDICATIONS

1. Procédé de séparation isotopique d'uranium selon lequel on envoie dans un mélange gazeux contenant des composés d'uranium 235 et d'uranium 238 au moins un faisceau de lumière émis par un ou plusieurs lasers pour réaliser une excitation sélective des composés d'uranium 235 ou d'uranium 238, caractérisé en ce que les composés d'uranium 235 et d'uranium 238 du mélange gazeux ont pour formule : $UO_2XYB_n$, dans laquelle X et Y sont des anions monovalents minéraux ou organiques, identiques ou différents, B est une base organique forte de Lewis et n est un nombre au plus égal à 3.

2. Procédé selon la revendication 1, caractérisé en ce que les anions X et Y et la base organique B sont choisis de telle façon que les composés d'uranium obtenus soient susceptibles d'avoir une pression de vapeur supérieure ou égale à 0,1 torr, à une température telle qu'ils ne soient pas décomposés.

3. Procédé selon l'une quelconque des revendications 1 et 2, caractérisé en ce que la base organique de Lewis B à un moment dipolaire au moins égal à 5 Debye et un volume moléculaire au moins égal à 100.

4. Procédé selon la revendication 3, caractérisé en ce que la base forte de Lewis B est l'hexaméthylphosphorotriamide de formule : $[(CH_3)_2N]_3 P = 0$

5. Procédé selon la revendication 3, caractérisé en ce que la base forte de Lewis B est choisie dans le groupe comprenant les phosphates et les oxydes d'amine.

6. Procédé selon l'une quelconque des revendications 1 à 5, caractérisé en ce que les anions X et Y sont choisis dans le groupe comprenant les anions $Cl^-$, $Br^-$, $NO^-_3$, $SCN^-$, $CF_3COO^-$, et les anions dérivant des acides aliphatiques fluorés ou perfluorés.

7. Procédé selon la revendication 4, caractérisé en ce que les anions X et Y sont des anions trifluoroacétate de formule $CF_3COO^-$ et en ce que n est égal à 2.

8. Procédé selon la revendication 4, caractérisé en ce que les anions X et Y sont constitués respectivement par $NO^-_3$ et $SCN^-$ et en ce que n est égal à 2.

9. Procédé selon l'une quelconque des revendications 1 à 8, caractérisé en ce que l'excitation des composés d'U 235 ou d'U 238 est obtenue en envoyant dans le mélange gazeux un faisceau de lumière émis par un laser à $CO_2$.

10. Procédé selon l'une quelconque des revendications 1 à 8, caractérisé en ce que l'excitation des composés d'uranium 235 ou d'uranium 238 est obtenue en envoyant dans le mélange gazeux un faisceau de lumière visible dont la longueur d'onde est comprise entre 300 et 500 nanomètres.

11. Procédé selon l'une quelconque des revendications 1 à 8, caractérisé en ce que l'excitation des composés d'uranium 235 ou d'uranium 238 est obtenue en envoyant dans le mélange gazeux un faisceau de lumière émis par un laser à $CO_2$ et un faisceau de lumière ultraviolette.

0086313

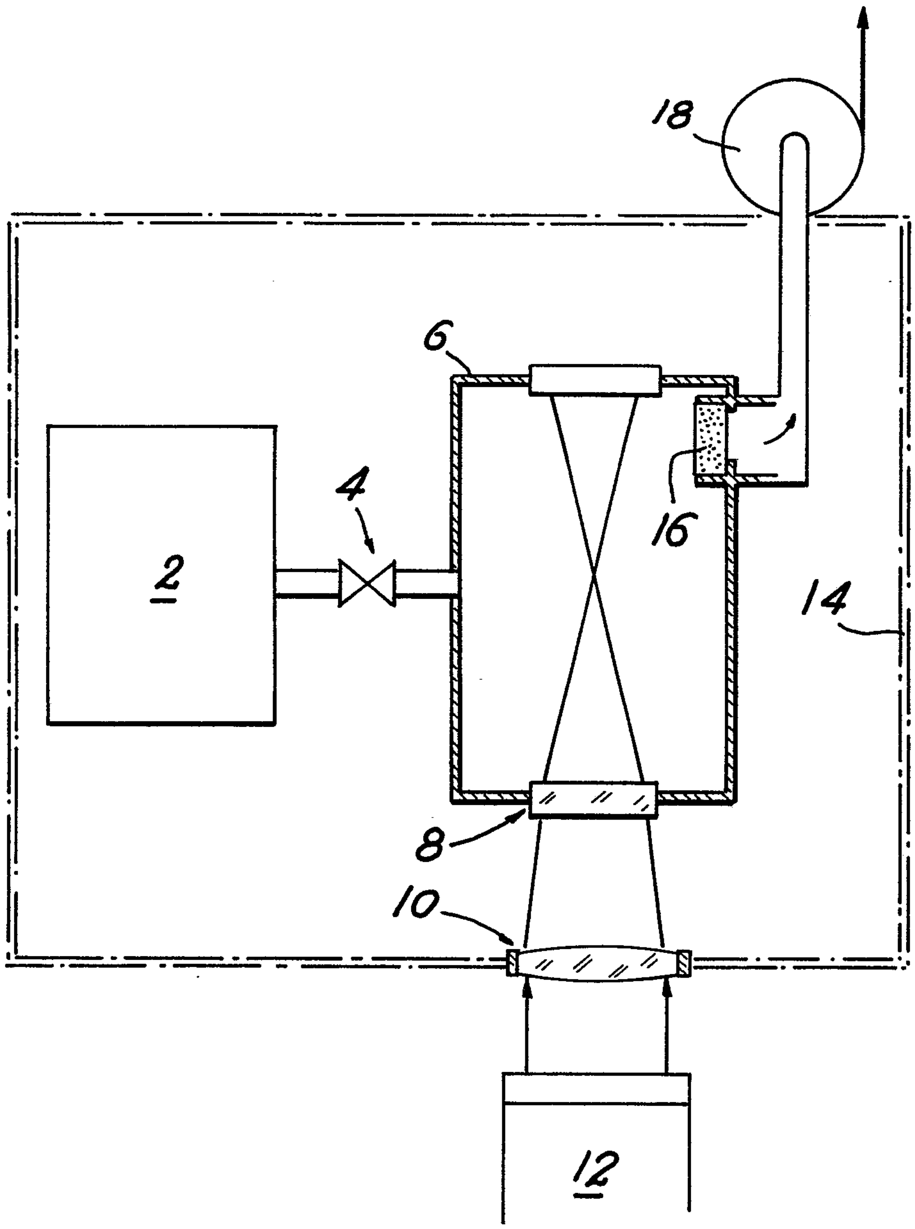

0086313

Office européen des brevets

# RAPPORT DE RECHERCHE EUROPEENNE

Numéro de la demande

EP 82 40 0259.6

| DOCUMENTS CONSIDERES COMME PERTINENTS | | | CLASSEMENT DE LA DEMANDE (Int. Cl. 3) |
|---|---|---|---|
| Catégorie | Citation du document avec indication, en cas de besoin, des parties pertinentes | Revendication concernée | |
| X | EP - A1- 0 034 677 (EXXON RESEARCH AND ENGINEERING CO.)<br>* revendications 1, 7; page 9, lignes 8 à 22 *<br>-- | 1,4-6,9 | B 01 D 59/34 |
| X | EP - A1 - 0 031 190 (EXXON RESEARCH AND ENGINEERING CO.)<br>* revendications 1, 2, 8; page 7, ligne 7 à page 8, ligne 18 *<br>-- | 1,4-6,9 11 | |
| | | | DOMAINES TECHNIQUES RECHERCHES (Int. Cl. 3) |
| X | EP - A1 - 0 031 634 (EXXON RESEARCH AND ENGINEERING CO.)<br>* revendications 1, 4; page 4, ligne 16 à page 6, ligne 4 *<br>---- | 1,2,4-6 9,11 | B 01 D 59/00 |

CATEGORIE DES DOCUMENTS CITES

X: particulièrement pertinent à lui seul
Y: particulièrement pertinent en combinaison avec un autre document de la même catégorie
A: arrière-plan technologique
O: divulgation non-écrite
P: document intercalaire
T: théorie ou principe à la base de l'invention
E: document de brevet antérieur, mais publié à la date de dépôt ou après cette date
D: cité dans la demande
L: cité pour d'autres raisons

&: membre de la même famille, document correspondant

X Le présent rapport de recherche a été établi pour toutes les revendications

| Lieu de la recherche | Date d'achevement de la recherche | Examinateur |
|---|---|---|
| Berlin | 30-08-1982 | BERTRAM |